Europäisches Patentamt

European Patent Office

Office européen des brevets

(19)

(11) Veröffentlichungsnummer : **0 456 271 B1**

## (12) EUROPÄISCHE PATENTSCHRIFT

(45) Veröffentlichungstag der Patentschrift :
**08.09.93 Patentblatt 93/36**

(51) Int. Cl.$^5$: **C02F 5/08, C23F 11/08**

(21) Anmeldenummer : **91107723.8**

(22) Anmeldetag : **13.05.91**

(54) Reiniger für Trinkwasseranlagen.

(30) Priorität : **11.05.90 DE 4015201**

(43) Veröffentlichungstag der Anmeldung :
**13.11.91 Patentblatt 91/46**

(45) Bekanntmachung des Hinweises auf die
Patenterteilung :
**08.09.93 Patentblatt 93/36**

(84) Benannte Vertragsstaaten :
**AT BE CH DE DK ES FR GB GR IT LI LU NL SE**

(56) Entgegenhaltungen :
**US-A- 4 199 469**
**DATABASE WPIL, Nr. 84-298214 [48], Derwent**
**Publications Ltd, London, GB; & JP-A-59 185**
**786 (MITSUBISHI IND.)**

(56) Entgegenhaltungen :
**PATENT ABSTRACTS OF JAPAN, Band 4, Nr.**
**174 (C-033), 2. Dezember 1980; & JP-A-55 114**
**396 (WADA YOROKU) 03-09-1980**
**PATENT ABSTRACTS OF JAPAN, Band 6, Nr.**
**78 (C-102), 15. Mai 1982; & JP-A-57 015 895**
**(KURITA WATER IND.) 27-01-1982**

(73) Patentinhaber : **Wessollek, Heimo**
**Am Bahnhof 1**
**D-90571 Schwaig (DE)**

(72) Erfinder : **Wessollek,Heimo Ing**
**Am Bahnhof 1**
**W-8501 Schwaig 1 (DE)**

(74) Vertreter : **Neidl-Stippler, Cornelia, Dr.**
**Rauchstrasse 2**
**D-81679 München (DE)**

EP 0 456 271 B1

## Beschreibung

Die Erfindung betrifft einen Reiniger für Trinkwasseranlagen, die Ablagerungen wie Kalk, Fett, Eisen oder manganhaltige Verockerungen aufweisen, mit einem Gehalt an Ascorbinsäure und Citronensäure sowie ein Verfahren zum Reinigen von Trinkwasseranlagen.

Reiniger für Trinkwasseranlagen sind insbesondere zur Brunnenerhaltung, zur Pflege von Brunnen und Regenerierung derselben notwendig. Sie werden dabei in die Trinkwasseranlage eingebracht und bewirken in der Trinkwasseranlage eine Auflösung der dort vorhandenen oxidischen und carbonathaltigen Verockerungen, beispielsweise eisen- und/oder manganhaltigen Carbonaten und Oxiden.

Dabei sollen nach einer Reinigung des Brunnens keine Keime vorhanden sein, andererseits aber auch keine giftigen Substanzen aus der Reinigungslösung vorliegen.

Trinkwasserreiniger und Verfahren zum Reinigen von Trinkwasseranlagen, eingeschlossen Brunnen, Leitungen und dergleichen, sind bekannt.

So ist beispielsweise aus der DE-A 35 38 131 ein Lösungsmittel für schwer lösliche Carbonate bekannt geworden, das Citronen- oder Oxalsäure in Mischung mit einer festen Lewissäure, vorzugsweise Eisen- oder Aluminium-III-chlorid im Verhältnis von 1 : 3 zur Auflösung dieser Beläge verwendet. Das Verfahren ist insofern für Trinkwasseranlagen nachteilig, als es toxische Metallsalze enthält, die in Trinkwasseranlagen unerwünscht sind.

Oxalsäure ist toxisch und bildet ferner schwerlösliche Salze mit Calcium, das meist in den Brunnenanlagen enthalten ist.

Aus der DE-A 35 04 394 ist eine Mischung einer Mineralsäure, insbesondere Salzsäure, die gemeinsam mit 1 bis 10 Gew.-% einer organischen $C_1$ bis $C_{10}$-Persäure eingesetzt wird, um Wasserversorgungsanlagen zu reinigen, bekannt.

Die Verwendung anorganischer Säuren und insbesondere von Chloriden führt jedoch - insbesondere gemeinsam mit Persäuren - zur Bildung des giftigen Chlors, das in Trinkwasseranlagen unerwünscht ist. Ferner soll die Belastung der Umwelt mit anorganischen Anionen möglichst gering gehalten werden.

Schließlich ist das vorgeschlagene Mittel flüssig und erfordert besondere Maßnahmen in der Handhabung (Gefahren: Gütertransporte, Verätzungsgefahr beim Auslaufen).

Aus der DE-A 33 03 802 ist ein Verfahren zum Reinigen und Konditionieren von wasserführenden Systemen und ein Reiniger für Wasserbrunnen bekannt geworden, bei dem ein oberflächenaktives Mittel in Mischung mit einer dithionithaltigen Verbindung zur Auflösung der Beläge eingesetzt wird.

Das dort bis zu 70 Gew.-% eingesetzte Natriumdithionit ist ein anorganisches, toxisches Material, dessen Verwendung in Trinkwassersystemen möglichst vermieden werden sollte.

Aus der DE-A 38 28 229 ist eine Mischung von Ascorbinsäure, Amidosulfonsäure und Entschäumer, gemeinsam mit einem Biozid für wäßrige Reinigungsmittel, wie beispielsweise Benzalkoniumchlorid, Glutardialdehyd oder auch Glyoxal zum Reinigen von Brunnen u. dgl. bekannt.

Auch bei diesem Reinigungsmittel ist festzustellen, daß die Amidosulfonsäure toxisch ist, sodaß bei der Handhabung und der Entsorgung erhöhter Aufwand betrieben werden muß, abgesehen von den durch sie möglicherweise verursachten toxischen Ablagerungen im Brunnen, die ungünstig für Trinkwasseranlagen sind.

Aus der DE-A 28 55 822 ist ein Verfahren zur Entfernung von Ablagerungen, die Calciumoxalat als Hauptkomponente enthalten, bekannt geworden, bei dem eine wäßrige Lösung mit einem Gehalt an Aluminium- oder Eisen-III-ionen gemeinsam mit Anionen einer oder mehrerer Säuren aus der Gruppe der Mineralsäuren und organischen Säuren eingesetzt wird.

Aus der DE-B 20 40 546 ist eine wäßrige Lösung einer aliphatischen Carbonsäure zur Entfernung von Verockerungen oder Ablagerungen bekannt geworden, die L-Ascorbinsäure als aliphatische Carbonsäure enthält. Die Verwendung von L-Ascorbinsäure alleine ist insofern nachteilig, als das Material relativ teuer ist und ferner zu Verkeimungen neigt.

Die Auslegeschrift gibt keinerlei Hinweis darauf, wie dieses Problem gelöst werden soll.

In der WO-A 84/02125 wird ein Verfahren zur Entfernung von manganhaltigen Inkrustationen aus zur Wasserversorgung betriebenen Einrichtungen beschrieben, das eine Lösung mit einem Gehalt von Salzsäure im Bereich von 0,001 N bis 6 N mit bis zu 20 Gew.-% Wasserstoffperoxid zum Spülen einsetzt.

Dieses Material ist durch die Verwendung des hochprozentigen Wasserstoffperoxids schwierig zu handhaben und explosiv, außerdem treten auch hier wieder die unerwünschten Effekte der Chloridionen auf.

Aus der DE-A 25 20 988 ist ein zweistufiges Verfahren bekannt geworden, das zuerst mit einer Säure behandelt und anschließend eine $H_2O_2$-Behandlung zur Oxidation von Lebewesen beinhaltet. Zweistufige Verfahren sind insofern nachteilig, als sie einen erheblich höheren Aufwand in der Handhabung und im Transport bedeuten, und ferner auch Fehlermöglichkeiten durch falsche Handhabung bestehen.

Aus der DE-A 36 25 280 ist es bekannt, Wirkkomponenten in fester Form einzusetzen, die aus zwei Teil-

2

packungen bestehen, wobei die erste Teilpackung wasserlösliche, feste organische und/oder anorganische Säuren und saure Salze in pulverisierter und granulierter Form aufweist und die andere Ascorbinsäure, Citronensäure und eine langsam Peroxid-Sauerstoff abgebende Komponente aufweist. Bei der Mischung der 2. Packung wirken die reduzierende Ascorbinsäure und die Peroxo-Verbindung gegeneinander, so daß sich das Oxidationspotential der Peroxosäure zumindest teilweise aufhebt.

Beim Stand der Technik wurden also zur Auflösung von Brunnenablagerungen oder -verockerungen meist Mineralsäuren, beispielsweise Salzsäure oder aber auch andere stark saure Lewissäuren wie beispielsweise Aluminiumchlorid oder Eisen-III-Chlorid, ggf. in Kombination mit Komplexbildnern zur Reinigung benutzt. Diese Substanzen haben aber den Nachteil, daß sie toxisch sind. Die Toxizität der Substanzen ist nicht nur im Zusammenhang mit der lebensmittelrechtlichen Unbedenklichkeit des Trinkwassers nachteilig, sondern sie führt auch dazu, daß bei der Verpackung und dem Transport der Reiniger erheblicher Aufwand betrieben werden muß. Starke Säuren dürfen nur unter Transportauflagen befördert und gehandhabt werden, was zu erheblichen Kosten und auch Risiken und besonderen Anforderungen an das die Reinigung durchführende Personal führt.

Ein weiterer Nachteil bekannter Reinigungsmittel, die meist in flüssiger Form vorliegen, besteht darin, daß sie zu einem großen Teil aus Wasser bestehen und demzufolge unnötige Verpackungs- und Transportkosten durch das reinigungsunwirksame Wasser entstehen.

Es ist also Aufgabe der Erfindung, ein lebensmittelrechtlich unbedenkliches Reinigungsmittel für Trinkwasseranlagen vorzuschlagen, das die oben genannten Nachteile des Standes der Technik vermeidet.

Die Aufgabe wird erfindungsgemäß durch einen Citronensäure und Ascorbinsäure aufweisenden Reiniger gelöst, der zwischen 2,5 bis 4 Gewichtsteile Citronensäure, bevorzugt 2,5 bis 3,5 Gewichtsteile Citronensäure auf 1 Gewichtsteil Ascorbinsäure mit 0,3 bis 10 Gew.-% der Gesamtmenge eines Lebensmittel-Konservierungsmittels in einer Packung besitzt.

Vorteilhafte Weiterbildungen der Erfindung ergeben sich aus den Unteransprüchen.

Dadurch, daß lediglich lebensmittelrechtlich unbedenkliche Substanzen verwendet werden, nämlich Citronensäure, Ascorbinsäure sowie Lebensmittelkonservierungsstoffe, nämlich Sorbinsäure, Benzoesäure, p-Hydroxybenzoesäure, Ameisensäure und Propionsäure sowie deren Abkömmlinge, eingeschlossen Salze und Ester derselben, kann ein Reinigungsmittel zur Verfügung gestellt werden, das vollkommen gesundheitlich unbedenklich ist, andererseits jedoch eine ausgezeichnete Reinigungswirkung für Brunnen besitzt.

Dabei ist festzustellen, daß die Ascorbinsäure bereits in der Getränkeherstellung als Konservierungsmittel verwendet wird und als Vitamin C als praktisch ungiftig zu bezeichnen ist. Auch Citronensäure ist lebensmittelrechtlich unbedenklich. Beide Säuren sind gute Komplexbildner für 2- und 3-wertige Metallionen, wobei Ascorbinsäure reduzierend wirkt und somit höhere Oxidationsstufen teilweise zu reduzieren und zu solubilisieren vermag.

Benzoesäure wirkt konservierend und bakterizid, so daß die Mischung von Citronen- und Ascorbinsäure noch weiter in ihrer bakteriziden Wirkung verstärkt wird.

Es konnte festgestellt werden, daß der Zusatz von Benzoesäure die Keimzahl in Brunnen in überraschender Weise über einen langen Zeitraum zu erniedrigen vermochte, so daß auch bei organischen Säuren in bisher unerreichter Weise gute Keimzahlverminderungen auftreten konnten.

Insbesondere in Anbetracht der ständigen Bemühungen zur Reinerhaltung des Trinkwassers ist es daher erwünscht, nur ungiftige Substanzen in derartigen Reinigungsmitteln zu haben.

Den Hauptbestandteil des Reinigers bilden Citronensäure und Ascorbinsäure, wobei als Konservierungsmittel bevorzugt Benzoesäure oder eines ihrer Salze beigemischt ist, die im Sauren eine besonders bakterizide Wirkung aufweist.

Citronensäure ist dabei als ungiftiger Naturstoff mit einer zentralen Rolle im Stoffwechsel (Citronensäurecyclus) aller Organismen bekannt. Bei L-Ascorbinsäure handelt es sich um einen Naturstoff mit reduzierender Wirkung, der stabile Salze mit vielen Metallen bildet. Ascorbinsäure wird als Antioxidans in der Lebensmittelindustrie verwendet, d.h. es ist als Lebensmittelzusatzstoff zugelassen. Auch in größeren Mengen (g-Mengen pro Tag) genossen ist Ascorbinsäure ungiftig für den Menschen, da überschüssige Ascorbinsäure unverändert ausgeschieden wird.

Benzoesäure wird als Konservierungsstoff in der Lebensmittelindustrie eingesetzt. Sie ist ebenso wie ihre Salze als Lebensmittelzusatzstoff zugelassen und damit ebenfalls als ungiftig anzusehen. Gemäß Katalog des Bundesministeriums des Inneren vom 1.3.85 "Wassergefährdende Stoffe" wird Citronen- und Ascorbinsäure in WGK 0 (Wassergefährdungsklasse 0) eingestuft mit einem zusätzlichen Bonus für gute biologische Abbaubarkeit, während Benzoesäure aufgrund der bioziden Wirkungsweise in WGK 1 (schwach wassergefährdende Stoffe) eingestuft wird, wobei auch zu berücksichtigen ist, daß der Gewichtsanteil der Benzoesäure im Produkt niedrig ist.

Citronensäure und auch Ascorbinsäure bilden auch Komplexe mit Metallionen und vermögen dadurch die Auflösung und den Abtransport von metallhaltigen Ablagerungen in Brunnen gegenüber den häufig verwendeten Mineralsäuren, die eine geringere Komplexbildungs-neigung zeigen, zu erleichtern.

Es ist also festzstellen, daß das Reinigungsmittel aus wasserhygienischer Sicht ein dem biologischen Abbau gut zugängliches Produkt darstellt, das zudem ausgesprochen ungiftig für den Menschen ist. Es hat in wasserführenden Systemen eine sehr gute Wirkung gegen Kalk- sowie Eisen- und Manganablagerungen. Die sehr gute antibakterielle Wirkung stellt eine eindeutige Minderung der Keimvermehrung im Wasser dar.

Ein weiterer Vorteil der erfindungsgemäßen Zusammensetzung besteht darin, daß sie fest ist, also kein Wassergehalt unnötig erhöhte Transportkosten verursacht. Der pH-Wert der Lösung liegt bei einer Konzentration von 12 g pro Liter in entionisiertem Wasser bei 2,5, ist also ausreichend sauer, um beispielsweise Calciumcarbonat oder auch Eisenoxide zu lösen. Weitere Vorteile und Merkmale der Erfindung ergeben sich aus der nachfolgenden Beschreibung, in der die Erfindung anhand von Ausführungsbeispielen sowie der begleitenden Zeichnung näher erläutert ist. Dabei zeigt:

Fig.1 Koloniezahlen in Trinkwasser, das 48 Std. bei Raumtemperatur (22°C) belassen wurde (bestimmt im Platecount-Verfahren bei 37°C Bebrütung):
1 = Nullkontrolle ohne Reiniger
2 = 12 g/l
3 = 1,2 g/l
4 = 0,12 g/l
5 = 0,012 g/l
6 = 0,0012 g/l
7 = 0,00012 g/l

Fig.2 Koloniezahlen in Trinkwasser, das 48 Std. bei 5°C belassen wurde (bestimmt im Plate-count-Verfahren bei 37°C Bebrütung):
1 = Nullkontrolle ohne Reiniger
2 = 12 g/l
3 = 1,2 g/l
4 = 0,12 g/l
5 = 0,012 g/l
6 = 0,0012 g/l
7 = 0,00012 g/l

Fig.3 Koloniezahlen in Trinkwasser, das 48 Std. bei Raumtemperatur (22°C) belassen wurde (bestimmt im Platecount-Verfahren bei 22°C Bebrütung):
1 = Nullkontrolle ohne Reiniger
2 = 12 g/l
3 = 1,2 g/l
4 = 0,12 g/l
5 = 0,012 g/l
6 = 0,0012 g/l
7 = 0,00012 g/l

Fig.4 Koloniezahlen in Trinkwasser, das 48 Std. bei 5°C belassen wurde (bestimmt im Plate-count-Verfahren bei 22°C Bebrütung);
1 = Nullkontrolle ohne Reiniger
2 = 12 g/l
3 = 1,2 g/l
4 = 0,12 g/l
5 = 0,012 g/l
6 = 0,0012 g/l
7 = 0,00012 g/l

Fig. 5 Biochemische Abbaukinetik eines erfindungsgemäßen Reinigers
Verdünnung: 1:1000:

|  | 24h | 48h | 90h | 96h | 120h |
|---|---|---|---|---|---|
| BSB/mg/l$O_2$ | 0,6 | 1,95 | 2,65 | 2,8 | 2,8 |
| Rest-$O_2$-Gehalt | 86,4 | 52,4 | 35,4 | 32,0 | 32,0 |

Beispiel

Es werden 3 Gewichtsteile Citronensäure mit 1 Gewichtsteil Ascorbinsäure sowie 1 Gewichtsteil Benzoesäure innig vermischt und in Portionsbeutel zu 500 g eingeschweißt.

Die Beutel werden am Einsatzort aufgeschnitten und jeweils in ca 3,5 l Wasser gelöst, diese Lösung in den zu reinigenden Brunnen gegossen und dort ca 12 Stunden belassen. Anschließend wird die Lösung abgepumpt.

Herstellungsbeispiel

200 g Ascorbinsäure und 800 g Citronensäure werden mit 100 g Benzoesäure vermischt und in einen Polyethylenfolienbeutel eingeschweißt. Das Produkt ist reinweiß und ungiftig.

Anwendungsbeispiel

3 g der Mischung aus dem Herstellungsbeispiel wurden in einen Erlenmeyerkolben mit 250 ml Wasser überführt und dazu 3 g eines trockenen Stückes einer Brunnenablagerung gegeben. Nach 24 Std. Stehenlassen war die Ablagerung vollständig gelöst.

Bakteriologische Beurteilung

Als Reiniger wurde eine Mischung nach Beispiel 1 untersucht. Trinkwasser der Stadt Erlangen wurde aus einem wenig frequentierten Leitungsendstrang entnommen, in Portionen von 10 ml in sterile Reagenzgläser überführt und folgende Ansätze hergestellt:

```
6 Reagenzgläser ohne Reiniger = Blindprobe
3 Reagenzgläser mit 12g/l         der Mischung des Beispiels 1
3 Reagenzgläser mit  1,2g/l       der Mischung des Beispiels 1
3 Reagenzgläser mit  0,12g/l      der Mischung des Beispiels 1
3 Reagenzgläser mit  0,012g/l     der Mischung des Beispiels 1
3 Reagenzgläser mit  0,0012g/l    der Mischung des Beispiels 1
3 Reagenzgläser mit  0,00012g/l   der Mischung des Beispiels 1
```

Zwei dieser Ansätze (2×21 Reagenzgläser) werden die nächsten 48 Stunden bei 22°C stehengelassen.

Ein weiterer Testansatz (21 Reagenzgläser) wird die nächsten 48 Stunden im Kühlschrank bei +5°C belassen. Jeweils sofort, nach 24 Std. und 38 Std. werden aus allen Proben 0,1 ml entnommen und nach den Vorschriften der Deutschen Trinkwasserverordnung im Plate-Count-Verfahren jeweils bei 22°C und 37°C Bebrütung einer Koloniezahlbestimmung unterworfen.

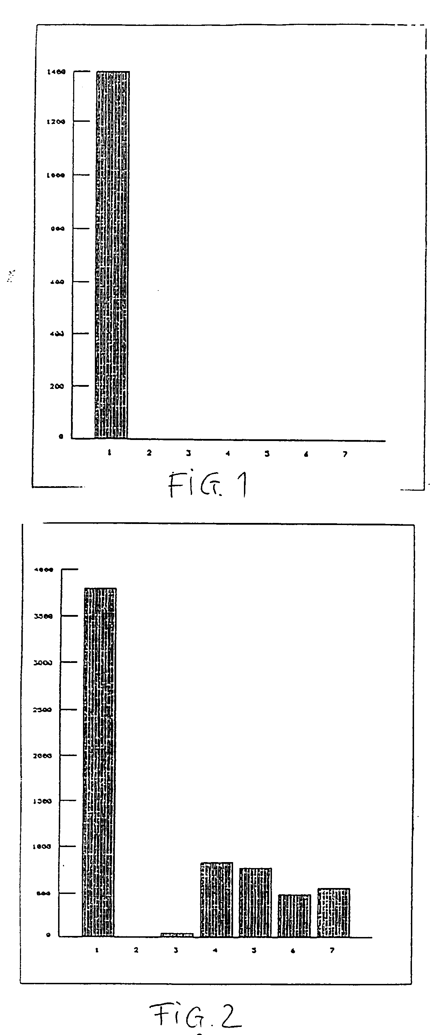

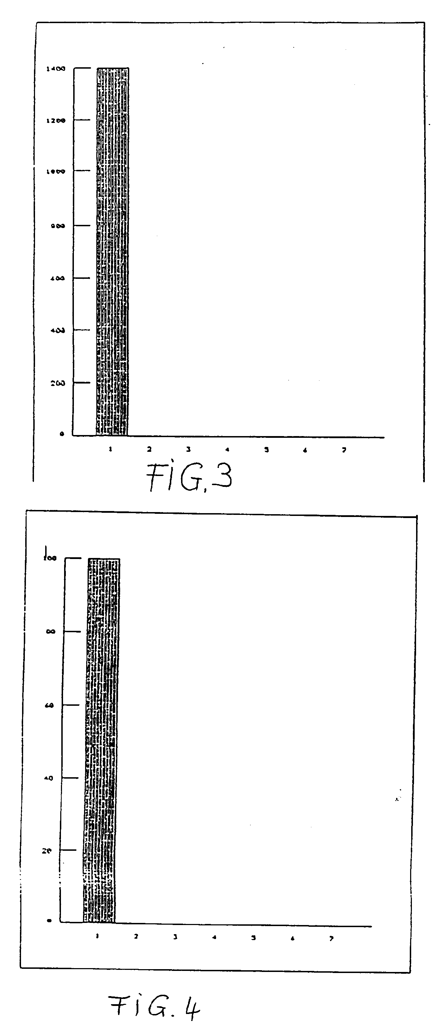

Die Ergebnisse sind in den Fig.1-4 dargestellt. Es zeigt sich eindeutig, daß die Koloniezahlen in den mit der o.g. Mischung behandelten Wasserproben nicht größer sind, als die Koloniezahlen in den unbehandelten Proben (Blindproben). Demzufolge wirken die eingesetzten organischen Säuren keineswegs keimbildungsfördernd, sondern führen in Konzentrationen von 0,12 g/l zu einer absoluten Keimwidrigkeit, die auch einer Wiederverkeimung entgegenwirkt.

Selbst wenn der Bakterienflora des Trinkwassers eine optimale Wachstumstemperatur von 22°C angeboten wird, Verhältnisse, die in der Realität niemals oder nur unter extremen Bedingungen auftreten, läßt sich kein bekterienwachtsumsfördernder Effekt finden.

Biochemischer Abbau

Der biologische (BSB) und chemische (CSB) Sauerstoffbedarf von verdünnten Lösungen der Mischung gemäß Ausführungsbeispiel wurde bestimmt.

Analysenverfahren waren für den chemischen Sauerstoffbedarf die DIN 38409 H41, für den biologischen Sauerstoffbedarf wurden Proben mit 1:100, 1:1000 und 1:100000 mit destilliertem, sauerstoffgesättigtem Wasser verdünnt und angeimpft. Die Sauerstoffzehrungen wurden mit Sauerstoffelektrode nach DIN 38408 G22 bestimmt.

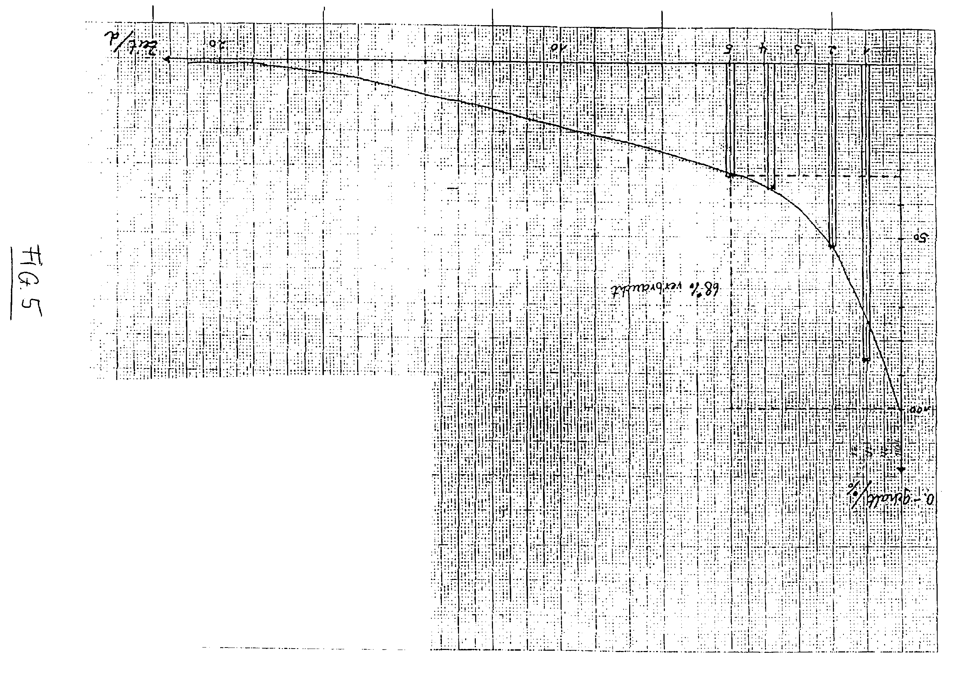

Der biologische Abbaurate des Regenerieungsmittels wird über den biochemischen Sauerstoffbedarf (auf manometrischem Wege) ermittelt. Dieses Verfahren stellt nicht nur ein Maß für den oxidativen Abbau der organischen Inhaltsstoffe auf mikrobiologischem Wege dar, sondern läßt aufgrund des entsprechenden Kurvenverlaufs auch Aussagen über die Kinetik des Abbaus zu. Als Berechnungsgröße für die Abbaurate dient der nach der Kaliumdichromatmethode experimentell festgestellte chemische Sauerstoffbedarf($5,7$ mg/l O2 bei einer Verdünnung 1:1000), der als Maß für die vollständige Mineralisation der organischen Substanz des Reinigers herangezogen wird. Sieht man diesen Wert als die für den 100%-igen Abbau erforderliche Sauerstoffmenge an, so beträgt der biochemische Abbau, ausgedrückt als BSB, $2,8$ mg/l O2 bei einer Verdünnung 1:100. Wie aus der Fig. 5 ersichtlich, die die biochemische Abbaukinetik einer Verdünnung 1:1000, gemessen in prozentualem Sauerstoffgehalt (Ordinate) aufgetragen gegen die Zeit in Tagen für den o.g. Reiniger (auf manometrischem Wege ermittelt) enthält, ist die biochemische Oxidation nach 5 Tagen zu bereits 68% abgeschlossen. Der Endpunkt des mikrobiologischen Abbaus der chemisch oxidierbaren Inhaltsstoffe ist unter den gewählten Versuchsbedingungen - extrapoliert - nach etwa 20 Tagen erreicht.

Das Reinigungsmittel ist also biologisch vollständig abbaubar und belastet das Ökosystem nicht, fördert die Keimbildung jedoch auch nicht.

CSB (Original-Probe)          5730 mg/l O$_2$

| Verdünnung | 1:100 | 1:1000 | 1:10000 |
|---|---|---|---|
| CSB (theor.) mg/lO$_2$ | 57 | 5,7 | 0,57 |
| BSB (24 Std.)mg/lO$_2$ | 0,85 | 0,60 | keine Zehrung |
| BSB (48 Std.)mg/lO$_2$ | 3,8 | 1,95 | 0,1 |
| BSB (90 Std.)mg/lO$_2$ | 8,2 | 2,65 | 0,4 |
| BSB (96 Std.)mg/lO$_2$ | ausgezehrt | 2,80 | 0,5 |
| BSB (120Std.)mg/lO$_2$ | ausgezehrt | 2,80 | 0,7 |

**Patentansprüche**

1. Reiniger für Trinkwasseranlagen, die Ablagerungen wie Kalk, Fett, Eisen, oder manganhaltige Verockerungen aufweisen, mit einem Gehalt an Ascorbinsäure und Citronensäure, dadurch gekennzeichnet, daß zwischen 2,5 bis 4 Gewichtsteile Citronensäure, bevorzugt 2,5 bis 3,5 Gewichtsteile Citronensäure auf 1 Gewichtsteil Ascorbinsäure mit 0,3 bis 10 Gew.% der Gesamtmenge eines Lebensmittelkonservierungsmittels in einer Packung vorliegen.

2. Reiniger nach Anspruch 1, dadurch gekennzeichnet, daß das Lebensmittelkonservierungsmittel ausgewählt ist aus der Gruppe bestehend aus Sorbinsäure, Benzoesäure, p-Hydroxybenzoesäure, Ameisensäure und Propionsäure sowie deren Abkömmlinge, eingeschlossen Salze und Ester derselben.

3. Reiniger nach Anspruch 1 oder 2, dadurch gekennzeichnet, daß der Lebensmittelkonservierungsstoff zu 0,4 bis 1 Gew.% der Gesamtmenge in der Mischung vorliegt.

4. Reiniger nach Anspruch 1 oder 2, dadurch gekennzeichnet, daß der Reiniger zusätzlich Stabilisatoren, Kosrrosionsinhibitoren, Emulgatoren, Sprengmittel und/oder Netzmittel enthält.

5. Verfahren zum Reinigen von Trinkwasseranlagen, dadurch gekennzeichnet, daß eine Reinigungslösung des Reinigers nach einem der vorangehenden Ansprüche in Wasser in die Trinkwasseranlage oder den Brunnen eingebracht werden und nach einer Einwirkzeit daraus entfernt werden.

## Claims

1. Cleaner for drinking water facilities affected by deposits of calcium carbonate, grease, iron or manganese ochre, comprising ascorbic acid and citric acid, characterized by comprising in one package between 2.5 and 4 weight parts citric acid, preferably 2.5 to 3.5 weight parts citric acid for one weight part ascorbic acid and 0.3 to 10 wt %, of a food preserving agent, calculated on the basis of the total amount.

2. Cleaner according to claim 1, characterized in that the food preserving agent is selected from the group consisting of sorbic acid, benzoic acid, p-hydroxy benzoic acid, formic acid, and propionic acid and their derivatives, including salts and esters therof.

3. Cleaner according to claim 1 or 2, characterized in that the food preserving agent constitutes 0.4 to 1 wt % of the total weight of the mixture.

4. Cleaner according to claim 1 or 2, characterized in that the cleaner additionally contains stabilizers, corrosion inhibitors, emulsifying agents, disintegrants and/or surfactants.

5. Process for the cleaning of drinking water facilities characterized by introducing a cleaning solution of the composition according to any of the preceding claims in water into the drinking water facility, well or the like and removing the same after a certain period of application.

## Revendications

1. produit à nettoyer pour des installations d'eau potable qui présentent des dépôts tels que de calcaire, de graisse, de fer ou des incrustations manganésifères, contenant de l'acide citrique et de l'acide ascorbique, caractérisé en ce qu'il contient dans une seule unité d'entourage 2,5 à 4 parties en poids d'acide citronique, de préférance entre 2,5 et 3,5 parties en poids d'acide citronique par 1 partie de poids d'acide ascorbique à 0.3 à 10 % en poids totale d'un conservateur alimentaire.

2. produit selon la revendication 1, caractérisé en ce que ledit conservateur alimentaire est sélectionné du groupe consistant de l'acide sorbique, l'acide benzoïque, l'acide hydroxybenzoïque-p, l'acide formique et l'acide propionique ainsi que leurs derives, y compris leurs sels et leurs esters.

3. produit selon un quelconque des revendications 1 ou 2, caractérisé en ce que ledit conservateur alimentaire est présent de 0,4 à 1 % en poids de la quantité totale du mélange.

4. produit selon l'un de quelconque des revendications 1 ou 2, caractérisé en ce que le produit contient additionellement des stabilisants, les agents anticorrosifs, des émulsifiants, désintégrants et/ou des agents mouillants.

5. procédé de nettoyer des installations d'eau potable caractérisé en ce qu'une solution du produit selon une quelquonque des revendications précédentes est, en eau, mis introduite dans ladite installation d'eau potable ou dans le puis et est enlevée après une durée d'effet.

FIG. 1

FIG. 2

8

FIG. 3

FIG. 4

FIG. 5